Europäisches Patentamt

European Patent Office

Office européen des brevets

(19)

(11) Veröffentlichungsnummer: **0 252 521 B1**

(12) # EUROPÄISCHE PATENTSCHRIFT

(45) Veröffentlichungstag der Patentschrift:
09.10.91 Patentblatt 91/41

(51) Int. Cl.$^5$: **A62D 3/00**

(21) Anmeldenummer: **87110006.1**

(22) Anmeldetag: **10.07.87**

(54) Verfahren zum Abbau von polyhalogenierten Verbindungen.

Die Akte enthält technische Angaben, die nach dem Eingang der Anmeldung eingereicht wurden und die nicht in dieser Patentschrift enthalten sind.

(30) Priorität: **11.07.86 DE 3623492**

(43) Veröffentlichungstag der Anmeldung:
**13.01.88 Patentblatt 88/02**

(45) Bekanntmachung des Hinweises auf die Patenterteilung:
**09.10.91 Patentblatt 91/41**

(84) Benannte Vertragsstaaten:
**AT BE CH DE ES FR GB GR IT LI LU NL SE**

(56) Entgegenhaltungen:
**EP-A- 159 366**
**EP-A- 170 714**
**EP-A- 204 910**
**EP-A- 0 044 991**
**EP-A- 0 065 865**
**EP-A- 0 184 342**
**DE-A- 3 447 337**
**CHEMICAL ABSTRACTS, Band 106, Nr. 4, 26. Januar 1987, Seite 255, Zusammenfassung Nr. 22601f, Columbus, Ohio, US; H. VOGG et al.: "Thermal behavior of PCDD/PCDF in fly ash from municipal incinerators", & CHEMOS-PHERE 1986, 15(9-12), 1373-8**

(56) Entgegenhaltungen:
**CHEMICAL ABSTRACTS, Band 98, Nr. 10, 7. März 1983, Seite 305, Zusammenfassung Nr. 77540g, Columbus, Ohio, US; & JP-A-57 165 021 (TOYO ENGINEERING CORP.) 09-10-1982 Chemosphere Band 11 Nr.6,S.569-576(82); Environ.Sci.Technology Bd.16,Nr.1,S.53-56(82) CA 85 82963 h (76)**

(73) Patentinhaber: **Hagenmaier, Hanspaul, Prof.Dr.**
**Liegnitzer Strasse 8**
**W-7400 Tübingen (DE)**

(72) Erfinder: **Hagenmaier, Hanspaul, Prof. Dr.**
**Liegnitzerstrasse 8**
**W-7400 Tübingen (DE)**
Erfinder: **Tichaczek, Karl-Heinz**
**Haldenstrasse 21**
**W-7300 Esslingen (DE)**
Erfinder: **Kraft, Michael**
**Eichenwiesen 6**
**W-7460 Balingen (DE)**
Erfinder: **Haag, Roland**
**Gustav-Werner-Strasse 61**
**W-7415 Wannweil (DE)**
Erfinder: **Brunner, Hermann**
**Bachgasse 15**
**W-7400 Tübingen (DE)**

(74) Vertreter: **Kinzebach, Werner, Dr. et al**
**Patentanwälte Reitstötter, Kinzebach und Partner Sternwartstrasse 4 Postfach 86 06 49**
**W-8000 München 86 (DE)**

## Beschreibung

Die Erfindung betrifft ein Verfahren zum Abbau von polyhalogenierten Cycloalkylverbindungen mit 4 bis 8 Kohlenstoffatomen und polyhalogenierten Aromaten mit mindestens 5 Kohlenstoffatomen durch Erhitzen in Anwesenheit eines Katalysators.

Polyhalogenierte Cycloalkylverbindungen und polyhalogenierte aromatische Verbindungen, wie polychlorierte Dibenzodioxine und polychlorierte Biphenyle, sind hochtoxische, teratogene und karzinogene Verbindungen. Insbesondere die Dioxine sind aufgrund ihrer Bildung bei Müll und Verbrennungsprozessen fast ubiquitär. Da sich die polyhalogenierten Verbindungen chemisch, thermisch und biologisch außerordentlich schwer abbauen lassen, werden sie zu einem immer größeren Problem für die Umwelt, insbesondere sind Spätschäden zu befürchten.

Beim Abbau von Chloraromaten, insbesondere polychlorierten Dibenzodioxinen (PCDD) und polychlorierten Dibenzofuranen (PCDF), wurden bisher drei Wege beschritten, nämlich der chemische Abbau der Chloraromaten durch Umsetzung mit Natrium oder mit Alkoholaten sowie der thermische oder photochemische Abbau von Chloraromaten mit oder ohne Verwendung eines Katalysators.

Der chemische Abbau ist beispielsweise in der EP-A-00 21 294 beschrieben. Danach bringt man eine Masse, die halogenierte aromatische Verbindungen enthält, mit Alkalimetalltalkoholaten oder mit Mischungen von Alkoholen mit alkalischen Reagentien, wie Alkalimetallhydroxiden und -carbonaten, bei 140 bis 220°C zur Reaktion.

Der thermische Abbau von PCDD und PCDF wurde anhand der Parameter, Temperatur und Verweilzeit untersucht. Es hat sich gezeigt, daß diese Verbindungen bei Temperaturen unterhalb von 600°C thermostabil sind und ein signifikanter Abbau dieser Verbindungen erst oberhalb von 800°C beginnt. Zur sicheren Zerstörung von PCDD und PCDF sowie von PCB (polychlorierte Biphenyle) arbeitet man deshalb bei Temperaturen von 1 200 bis 1 400°C.

Die photochemische Dehalogenierung von bromierten und chlorierten Verbindungen ist in der US-PS 4 144 152 beschrieben. Dabei werden diese Verbindungen mit UV-Licht von 185 bis 400 nm bestrahlt und mit Wasserstoffgas behandelt.

In der EP-A-0 184 342 ist der Abbau von organischen Halogenverbindungen, beispielsweise polychlorierten Biphenylen, mit Hilfe bestimmter metallischer Katalysatoren beschrieben. Die zu zerstörenden Verbindungen müssen dabei in gasförmigem Zustand vorliegen. Das Verfahren erfolgt bei einer Temperatur von 450 bis 650°C unter strengem Ausschluß von Sauerstoff. Man muß deshalb mit einem inerten Trägergas, beispielsweise einem Edelgas oder hochreinem Stickstoff arbeiten, weil ansonsten die Bildung chlorierter Dioxine oder Furane zu befürchten ist.

Die DE-A-34 47 337 beschreibt ein Verfahren zur chemischthermischen Zersetzung von höher halogenierten Kohlenwasserstoffen, wobei man in Gegenwart von Calciumoxid und/ oder Calciumhydroxid und 2 bis 30 Gew.-% Eisenoxid bei 600 bis 800 °C arbeitet. Die Calciumverbindungen sind dabei, bezogen auf das abzubindende Halogen, in mindestens zweifachem stöchiometrischem Überschuß vorhanden.

In Chemical Abstracts 98, 77540g (1983) ist ein Verfahren zur Behandlung von Abgasen beschrieben, die aus einer Müllpyrolyse stammen. Es wird ein Palladiumkatalysator bei 250 bis 800 °C verwendet. Die einzige in dem Pyrolysegas vorhandene organische Halogenverbindung ist das leicht abbaubare Methylenchlorid.

In Chemical Abstracts 85, 82963h (1976) ist ein Verfahren zur Zersetzung von organischen Chlorverbindungen, wie Polybiphenylchlorid, beschrieben. Zu diesem Zweck werden die Chlorverbindungen mit Metallen in zumindest stöchiometrischen Mengen dechloriert.

Die EP-A-159 366 beschreibt ein Hochtemperaturverfahren zur Umwandlung chlorierter Kohlenwasserstoffe und Metalloxide in Kohlenstoffoxide und Metallchloride. Dabei wird bei einer Temperatur von 700 bis 1200 °C und in Gegenwart von Chlor gearbeitet.

Die EP-A-170 714 beschreibt ein Verfahren zum Abbau polychlorierter Biphenyle und anderer halogenierter Kohlenwasserstoffe. Die abzubauenden Verbindungen werden dabei in ein Bad aus geschmolzenem Aluminium geleitet.

Die EP-A-204 910 veröffentlicht am 17.12.86, beschreibt ein Verfahren zur chemischthermischen Zersetzung von Halogenkohlenwasserstoffen. Zu diesem Zweck werden die Halogenkohlenwasserstoffe bei Temperaturen bis 1000 °C mit überstöchiometrischen Mengen von Calcium- und/oder Magnesiumsilikaten in einem Reaktor unter Inertgas umgesetzt.

In Chemosphere 11, 569 - 576 (1982) ist eine wissenschaftliche Untersuchung beschrieben, die sich in erster Linie mit der Adsorption von 1,2,3,4-Tetrachlordibenzo-p-dioxin an Flugasche aus Müllverbrennungsanlagen befaßt. Dabei ist ein Reaktionsrohr vorgesehen, das mit Flugasche beschickt ist. In das Reaktionsrohr wird eine Dioxinlösung injiziert, verdampft und mittels Luft oder Helium als Trägergas über die Flugasche befördert. Die an der Flugasche adsorbierte Menge an Dioxin wird dann in Abhängigkeit von der Temperatur bestimmt. Weiter wird in dieser Publikation das Verhalten von tetrachloriertem Dioxin an Flugasche unter einem Heliumstrom untersucht. Dabei wird von einer Umwandlung von $T_4CDD$ in $T_3CDD$ berichtet.

In Environ. Sci. Technology 1982, 16, 53 - 56, wird die Chlorierung von Flugasche bei 200 und 300 °C beschrieben. Dabei wird die Bildung von chlorierten organischen Verbindungen in Spuren beobachtet.

Schließlich wurde über das Erhitzen von Flugasche aus Müllverbrennungsanlagen berichtet (Stieglitz und Vogg, 5. Internationales Dioxin-Symposium in Bayreuth, Sept. 85). Bei diesen Versuchen wurde die Flugasche unter einem Luftstrom in einem offenen System erhitzt. Dabei wurde beobachtet, daß bis 250°C keine Veränderung in der PCDD/PCDF-Konzentration der Flugasche eintritt. Bei 300°C ist eine Erhöhung dieser Konzentration auf das 10-fache zu beobachten. Ab 400°C wird der allmähliche Beginn einer thermischen Zersetzung unter gleichzeitigem teilweisen Ausgasen von PCDD/PCDF beschrieben.

Auf der Grundlage der bekannten Verfahren ist der Abbau von polychlorierten Verbindung bisher noch nicht zufriedenstellend gelöst. Entweder sind diese Verfahren umständlich und aufwendig (chemischer hbbau) oder sie sind mit großen apparativen Problemen behaftet und energieaufwendig (thermischer Abbau bei 1 200 - 1 400°C). Darüber hinaus hat sich gezeigt, daß trotz der beim thermischen Abbau zur Anwendung kommenden hohen Temperaturen der Abbau der Chloraromaten nicht vollständig ist.

Der Erfindung liegt deshalb die Aufgabe zugrunde, ein Verfahren zum Abbau von polyhalogenierten Verbindungen zu schaffen, das einfach und kostengünstig und insbesondere bei relativ niedrigen Temperaturen durchführbar ist, zu einem praktisch votiständigen Abbau der halogenierten Aromaten führt und das die direkte Behandlung kontaminierter Substrate jeglicher Form erlaubt.

Überraschenderweise wurde nun gefunden, daß man mit Hilfe bestimmter Metall verbindugen einen raschen und vollständigen Abbau von polyhalogenierten Verbindungen bei relativ niedrigen Temperaturen erreichen kann.

Gegenstand der vorliegenden Erfindung ist deshalb ein Verfahren zum Abbau von polyhalogenierten Cycloalkyl-verbindungen mit 5 bis 8 Kohlenstoffatomen und polyhalogenierten Aromaten mit mindestens 6 Kohlenstoffatomen durch Erhitzen in Anwesenheit eines Katalysators das dadurch gekennzeichnet ist, daß man

a) ein mit den polyhalogenierten Verbindungen kontaminiertes festes Substrat in innigem Kontakt mit dem Katalysator in einem geschlossenen System erhitzt, wobei man als Katalysator Asche oder ein Metall eines Elementes der Gruppen Ia, Ib, IIa, IIb, IIIa, IVa, IVb, VIb, VIIb oder VIIIb des Periodensystems oder ein Oxid, Carbonat oder Silikat davon, oder eine Mischung davon verwendet,

b) die in einem mit den polyhalogenierten Verbindungen kontaminierten festen Substrat vorhandenen flüchtigen Bestandteile oder ein mit den polyhalogenierten Verbindungen kontaminiertes flüssiges Substrat oder die polyhalogenierten Verbindungen selbst durch Erhitzen oder Verbrennen in den gasförmigen Zustand überführt und die entstandenen Gase oder ein mit den polyhalogenierten Verbindungen kontaminiertes gasförmiges Substrat in Gegenwart von Sauerstoff und Wasser in innigem Kontakt mit dem Katalysator erhitzt, wobei man als Katalysator ein Metalloxid eines Elementes der Gruppen Ia, Ib, IIa, IIb IIIa, IVa, IVb, VIb, VIIb oder VIIIb des Periodensystems oder eine Mischung davon in Form eines Festbettes verwendet oder

c) mit den polyhalogenierten Verbindungen kontaminierte Flugasche aus Müll- oder Abfallverbrennungsanlagen direkt in einem nicht-durchströmten System unter Sauerstoffmangelbedingungen erhitzt, wobei man jeweils bei einer Temperatur zwischen 200 und 550 °C arbeitet.

Die Katalysatoren können alleine oder im Gemisch zur Anwendung kommen. Besonders gute Ergebnisse werden beim Verfahren a) erhalten mit Na, K, Mg, Ca, Ba, Zn, Ni, Pb, Ti, Cu, Fe, Al, Pt, V, W, Mo, Rh oder Cr oder einem Oxid, Carbonat oder Silikat davon, wobei für die Bodendekontaminierung die Verwendung von Eisenoxiden, natürlichen Ca/Mg-Carbonaten und nicht-kontaminierten Aschen als Katalysatoren ganz besonders bevorzugt ist, weil diese nicht umweltschädlich sind und die dekontaminierten Böden wieder an Ort und Stelle eingebracht werden können.

Erfindungsgemäß sind alle Aschen geeignet, die mindestens einen der oben genannten Katalysatoren enthalten. Besonders geeignete Aschen sind beispielsweise Holzasche, die bekanntlich Natrium-, Kalium- und Calciumcarbonat enthält, sowie Kohleasche, z.B. Filterstäube (Flugaschen) und Bettaschen aus Kohleverbrennungsanlagen und Filterstäube aus Müll- und Abfallverbrennungsanlagen.

Bei der Variante b) sind die Oxide der genannten Metalle bevorzugt.

## Variante a)

Die polyhalogenierten Verbindungen liegen häufig als Kontaminierung eines festen Substrates vor. Beispielsweise können Böden (Erdreich) mit polychlorierten Biphenylen, Chlorbenzolen, Dioxinen und Dibenzofuranen kontaminiert sein. Weiter wird oft Aktivkohle zur Entfernung von polyhalogenierten Verbindungen aus

EP 0 252 521 B1

Gasen und Flüssigkeiten eingesetzt, so daß kontaminierte Aktivkohle beseitigt bzw. dekontaminiert werden muß.

In diesen Fällen kann eine Dekontaminierung dadurch erfolgen, daß man die kontaminierten Substrate mit dem als Feinpulver vorliegenden Katalysator innig vermischt und solange auf die oben angegebene Temperatur erhitzt, bis der gewünschte Abbaugrad erreicht ist.

Bei der Behandlung eines kontaminierten festen Substrates beträgt das Gewichtsverhältnis von Katalysator zu Substrat im allgemeinen etwa 1:30 bis 1:1, vorzugsweise 1:20 bis 1:5. Wenn man Flugasche als Katalysator verwendet, beträgt das Gewichtsverhältnis von Flugasche zu kontaminierten Substrat im allgemeinen etwa 1:5 bis 2:1, vorzugsweise 1:2 bis 2:1.

## Variante b:

Es hat sich in der Praxis als zweckmäßig erwiesen, ein kontaminiertes festes oder flüssiges Substrat oder eine polyhalogenierte Verbindung in hoch-konzentrierter Form nicht direkt mit dem Katalysator zu erhitzen, sondern die flüchtigen Bestandteile des festen Substrates bzw. die Flüssigkeit in den gasförmigen Zustand zu überführen. Dies kann auf übliche Weise durch Erhitzen, insbesondere aber durch Verbrennen des flüssigen Substrates bzw. der polyhalogenierten Verbindung in hoch-konzentrierter Form erfolgen. Dies kann bei Temperaturen von 500 °C - 1000 °C, eventuell unter Zugabe von Katalysator, erfolgen, da ein vollständiger thermischer Abbau bei diesem Primärvorgang nicht erforderlich ist. Beispiele hierfür sind das Abtreiben der flüchtigen Bestandteile einer kontaminierten Bodenprobe, das verbrennen von PCB-Ölen und der verpackungsmaterialien für derartige Öle und das Verbrennen bzw. Dekontaminieren kontaminierter Aktivkohle.

Die entstandenen, polychlorierte Verbindungen enthaltenden Gase oder ein kontaminiertes gasförmiges Substrat, z.B. das Abgas eines mit Deponiegas betriebenen Verbrennungsmotors, das aufgrund der Anwesenheit von Chlor im Deponiegas polychlorierte Verbindungen enthält, werden dann erfindungsgemäß einem katalytischen Abbau unterzogen. Hierzu werden die Gase in innigem Kontakt mit dem Katalysator in Form eines Festbettes erhitzt. Dies kann vorzugsweise dadurch erfolgen, daß man die heißen Gase über ein festes Katalysatorbett leitet, das gegebenenfalls beheizt wird.

Dabei wird in Gegenwart von Sauerstoff und Wasser gearbeitet, damit einmal die Katalysatoren überwiegend in Oxid-Form erhalten bleiben und zum anderen bei der Zerstörung der polyhalogenierten Verbindungen HCl und nicht Chlor gebildet wird. Bisherige Untersuchungen in Laborexperimenten haben keinen Hinweis ergeben, daß unter diesen Bedingungen eine Neubildung von polyhalogenierten Dioxinen und Dibenzofuranen stattfindet.

## Variante C:

Ein bisher noch nicht gelöstes Problem für die Umwelt stellt Flugasche dar, die in kommunalen Müllverbrennungsanlagen, aber auch in vielen industriellen Abfallverbrennungsanlagen anfällt. Da diese Flugasche Schwermetalle, vor allem aber auch polyhalogenierte Verbindungen, insbesondere polychlorierte Dibenzodioxine und Dibenzofurane enthält, muß die Flugasche in entsprechenden Abscheidevorrichtungen abgeschieden werden, z.B. in Zyklonabscheidern, Elektrofiltern oder ähnlichen Staubabscheidern.

Es wurde nun gefunden, daß die in Flugaschen aus Müll- und Abfallverbrennungsanlagen vorhandenen polychlorierten Verbindungen zerstört werden können, indem man die Flugasche direkt auf die oben angegebene Temperatur erhitzt. Wesentlich ist dabei, daß das Erhitzen im nicht-durch-strömten System erfolgt. Man arbeitet unter Sauerstoffmangelbedingungen, die man erzielt, indem man den Luftzutritt ausschließt durch Arbeiten im geschlossenen System oder unter Inertgasatmosphäre. Wird Luftzutritt verhindert, stellen sich die Sauerstoffmangelbedingungen von selbst ein. Dieser Schritt ist entscheidend, da bei einem dauernden Überangebot von Sauerstoff (Sauerstoffüberschuß-Bedingungen) eine Neubildung von polychlorierten Dibenzodioxinen und Dibenzofuranen stattfindet. Wenn in einem durchströmten System unter Inertgas gearbeitet wird, muß das Inertgas aufgeheizt werden und findet im durchströmten System selbst bei 300 °C ein teilweises Ausgasen der polychlorierten Verbindungen statt.

Da Flugasche aus Müll- und Abfallverbrennungsanlagen per se mindestens einen der obigen Katalysatoren als Oxid, Carbonat oder Salz enthält, kann Flugasche auch als solche als Katalysator in dem erfindungsgemäßen Verfahren Anwendung finden, selbst wenn die Flugasche polychlorierte Verbindungen enthält. In diesem Falt ist das Verfahren, wie oben beschrieben, im nicht-durchströmten System durchzuführen. Flugaschen aus Müll- und Abfallverbrennungsanlagen weisen im allgemeinen folgende Analysendaten auf:

| | |
|---|---|
| wasserlöslicher Anteil | 8 - 15 % |
| pH-Wert | 9 - 12 |
| Aluminium | $(50 - 120) \cdot 10^3$ mg/kg |
| Barium | 4000 - 7000 mg/kg |
| Blei | 4000 - 7000 mg/kg |
| Calcium | $(80 - 100) \cdot 10^3$ mg/kg |
| Chrom | 500 - 3000 mg/kg |
| Cadmium | 100 - 500 mg/kg |
| Eisen | $(20 - 50) \cdot 10^3$ mg/kg |
| Kalium | $(30 - 45) \cdot 10^3$ mg/kg |
| Kupfer | 500 - 4000 mg/kg |
| Magnesium | $(10 - 20) \cdot 10^3$ mg/kg |
| Mangan | 1000 - 1600 mg/kg |
| Natrium | $(10 - 30) \cdot 10^3$ mg/kg |
| Nickel | 100 - 1500 mg/kg |
| Titan | 7000 - 10 000 mg/kg |
| Zink | $(10 - 40) \cdot 10^3$ mg/kg |
| $SiO_2$ | $(250 - 500) \cdot 10^3$ mg/kg |

Flugaschen, die in einem oder mehreren der obigen Werte abweichen, sind jedoch ebenfalls zur Anwendung in dem erfindungsgemäßen Verfahren geeignet, wesentlich ist lediglich, daß die Flugasche mindestens einen der obigen Katalysatoren enthält.

Die Katalysatoren kommen im allgemeinen als Feinpulver mit einer Teilchengröße von kleiner als 0,1 mm oder als Pellets bzw. Waben zum Einsatz. Sie können unmittelbar oder auf einen Träger (z.B. Siliciumdioxid, $Al_2O_3$) aufgebracht verwendet werden. Flugaschen werden eingesetzt wie sie in den Verbrennungsanlagen anfallen.

Die zur Anwendung kommende Menge an Katalysator richtet sich nach dem zu dekontaminierenden Produkt und dem eingesetzten Katalysator selbst. Die im Rahmen der oben angegebenen Bereiche vorteilhafteste Katalysatormenge kann der Fachmann anhand einfacher Laborversuche ermitteln. Dies ist im Gegensatz zum Stand der Technik mit dem erfindungsgemäßen Verfahren möglich, weil es analytisch kontrollierbar ist, d.h. der Abbaugrad läßt sich quantitativ feststellen, indem man das Substrat/Katalysator-Gemisch auf dessen Gehalt an halogenierten Aromaten hin analysiert. Es ist leicht verständlich, daß eine analytische Bestimmung bei den Hochtemperaturverfahren des Standes der Technik während der Verbrennung nicht möglich ist.

Das erfindungsgemäße Verfahren läßt sich innerhalb eines breiten Temperaturbereiches in Abhängigkeit von dem zur Anwendung kommenden Katalysator und der Verweilzeit durchführen. In bestimmten Fällen reichen bereits 150 °C aus, um einen mehr als 99 %igen Abbau der halogenierten Aromaten zu erzielen.

Erfindungsgemäß arbeitet man deshalb in einem Temperaturbereich von 200 - 550°C. Als besonders geeignet haben sich Temperaturen von 300 - 500°C aber auch 200 - 400 °C, insbesondere 300 - 400 °C, erwiesen. Im allgemeinen ist der Abbau der polyhalogenierten Verbindungen bei etwa 350 °C ausreichend rasch und vollständig, d.h. es sind bei einer Nachweisgrenze von 0,01 - 0,1 ng/g abhängig vom Substrat keine polyhalogenierten Verbindungen mehr nachweisbar. Diese Temperatur hat sich in der Praxis deshalb besonders bewährt.

Wie bereits erwähnt, bestimmt die Höhe der Temperatur die Dauer der katalytischen Behandlung. Bei niedrigen Temperaturen muß eine längere Zeit erhitzt werden, während bei höheren Temperaturen der Abbau der Halogenverbindungen praktisch sofort erfolgt. Um jeweils einen vollständigen Abbau an polychlorierten Verbindungen zu erzielen, liegt die Umsetzungsdauer beispielsweise bei 150°C bei 1 - 3 h. Bereits bei 350°C beträgt diese Zeit weniger als 1 min, während bei 600°C der Abbau in wenigen Sekunden erfolgt.

Zur Durchführung des erfindungsgemäßen Verfahrens werden die polyhalogenierten Verbindungen mit dem Katalysator anhand üblicher Methoden, z.B. Vermahlen oder Aufbringen einer Lösung der polyhalogenierten Verbindungen auf den Katalysator und ggf. Verdampfen des Lösungsmittels, vermischt. Anschließend wird auf die gewünschte Temperatur erhitzt, bis der gewünschte Abbaugrad erreicht ist.

Das erfindungsgemäße Verfahren (Varianten a oder b) läßt sich in einem offenen oder geschlossenen System in üblichen Apparaturen duchführen. Bei der Variante a Kam unter Inertgasatmosphère gearbeitet werden. Bei der bekannten Toxizität der polyhalogenierten Verbindungen ist jedoch ein geschlossenes System vorzuziehen.

Der Abbau von halogenierten Aromaten mit Hilfe des erfindungsgemäßen Verfahrens erfolgt nach heutigem Wissensstand auf zwei verschiedenen Wegen: Die Katalysatoren bewirken zum einen eine Dehalogenierung und zum anderen einen Abbau des aromatischen Systems, wobei diese beiden Wege auch häufig gleichzeitig durchlaufen werden.

Mit dem erfindungsgemäßen Verfahren lassen sich schwer abbaubare polyhalogenierte Cycloalkylverbindungen und Aromaten insbesondere chlorierte und bromierte Aromaten einfach und rasch abbauen. Unter "Aromaten" sind hier insbesondere Benzol, Alkylbenzole, Naphthalin, Alkylnaphthaline, Biphenyl, Diphenylether und vor allem Dibenzodioxine und Dibenzofurane zu verstehen. Beispiele für derartige Verbindungen sind Hexachlorcyclohexan, polychlorierte Dibenzodioxine, polychlorierte Dibenzofurane, polychlorierte Biphenyle und polychlorierte Naphthaline, sowie die entsprechenden polybromierten und gemischt chlor/bromsubstituierten Verbindungen. Als besonders brauchbar hat sich das erfindungsgemäße Verfahren für die Dekontaminierung von Böden und Flugaschen, welche polyhalogenierte Verbindungen enthalten, sowie für die Abgasreinigung erwiesen.

Die nachstehenden Beispiele erläutern die Erfindung. Die Bestimmung der polyhalogenierten Verbindungen wurden mittels Gaschromatographie/Massenspektrometrie an Quarzkapillarsäulen Sitar 10C vorgenommen.

Die Katalysatoren kamen jeweils in Form eines feinen Pulvers oder als Pellets zur Anwendung.

## Beispiel 1

1 g einer Bodenprobe aus einem kontaminierten Bereich der 2,4,5-Trichlorphenol-Produktion eines Chemiewerkes, die 100 pbb 2,3,7,8-TCDD enthält, wurde mit der in der nachfolgenden Tabell angegebenen Menge Metall bzw. Metalloxid oder Flugasche katalysatorhaltig vermischt (durch Schütteln der luftgetrockneten Bodenprobe mit dem Katalysator) und wie in der Tabelle 4 angegeben behandelt. Es wurden folgende Ergebnisse erhalten:

**Tabelle 4**

| Katalysator | Temperatur (°C) | Verweilzeit (min) | % Abbau 2,3,7,8-TCDD |
|---|---|---|---|
| 0,2 g Cu | 250 | 40 | 79,4 |
| 0,2 g Cu | 300 | 30 | 95,2 |
| 0,2 g Cu | 300 | 60 | 96,4 |
| 0,2 g Cu | 350 | 30 | 99,0 |
| 0,2 g Cu | 350 | 60 | >99,9 |
| 0,2 g NiO | 300 | 60 | 99,7 |
| 0,2 g NiO | 350 | 30 | 99,85 |
| 0,2 g NiO | 350 | 120 | >99,9 |
| 0,2 g $Fe_2O_3$ | 350 | 120 | >99,9 |
| 0,2 g $Fe_3O_4$ | 350 | 120 | >99,9 |
| 1 g Flugasche [1] | 350 | 120 | >99,9 |

**Beispiel 2**

Der Abbau von PCDD/PCDF in Flugaschen aus verschiedenen Hausmüllverbrennungsanlagen wurde durch zweistündige Behandlung bei 280 °C bzw. 300 °C im nicht durchströmten System verfolgt. Die Ergebnisse sind in der nachfolgenden Tabelle 5 zusammengestellt unddenen für unbehandelte Flugasche (unbeh.) gegenübergestellt. Der Gehalt an chlorierten Verbindungen ist in ng/g angegeben.

Tabelle 5

| | Flugasche | | | | | | | | | | | | | |
|---|---|---|---|---|---|---|---|---|---|---|---|---|---|---|
| | A [1) unbeh. / 280 °C] | | B [unbeh. / 280 °C] | | C [unbeh. / 280 °C] | | D [unbeh. / 300 °C] | | E [unbeh. / 300 °C] | | F [unbeh. / 300 °C] | | G [unbeh. / 300 °C] | |
| | unbeh. | 280 °C | unbeh. | 280 °C | unbeh. | 280 °C | unbeh. | 300 °C | unbeh. | 300 °C | unbeh. | 300 °C | unbeh. | 300 °C |
| 2,3,7,8-TCDD | 0,5 | 0,9 | 2,0 | 3,2 | 0,6 | 1,6 | 0,34 | 0,04 | 0,03 | <0,01 | 0,21 | 0,01 | 0,12 | <0,01 |
| Summe TetraCDD | 24 | 21 | 24 | 59 | 12 | 30 | 3,8 | 1,2 | 0,6 | n.n. | 7,5 | 0,19 | 5,2 | 1,1 |
| Summe PentaCDD | 116 | 19 | 116 | 88 | 59 | 29 | 8,2 | 1,1 | 1,2 | n.n. | 13,2 | 0,25 | 11,4 | n.n. |
| Summe HexaCDD | 185 | 6 | 233 | 50 | 110 | 18 | 14,6 | 1,1 | 1,4 | n.n. | 15,8 | 0,10 | 15,0 | n.n. |
| Summe HeptaCDD | 159 | 2 | 1067 | 22 | 200 | 15 | 20,7 | 1,2 | 1,8 | n.n. | 12,4 | 0,10 | 25,6 | n.n. |
| OctaCDD | 88 | 1 | 6204 | 11 | 458 | 13 | 11,8 | 0,8 | 1,9 | n.n. | 14,5 | 0,07 | 23,1 | n.n. |
| Summe PCDD | 572 | 49 | 7644 | 230 | 839 | 105 | 59,1 | 5,4 | 6,9 | —— | 63,4 | 0,71 | 80,3 | 1,1 |
| Summe TetraCDF | 111 | 14 | 139 | 41 | 62 | 38 | 32,1 | 0,5 | 9,0 | n.n. | 28,7 | 0,15 | 22,4 | 10,1 |
| Summe PentaCDF | 188 | 12 | 393 | 69 | 250 | 41 | 38,3 | 0,5 | 10,2 | n.n. | 32,5 | 0,14 | 24,2 | n.n. |
| Summe HexaCDF | 123 | 4 | 415 | 34 | 377 | 30 | 31,7 | 0,4 | 8,0 | n.n. | 24,6 | 0,11 | 19,0 | n.n. |
| Summe HeptaCDF | 35 | 1 | 844 | 9 | 292 | 16 | 15,9 | 0,3 | 3,4 | n.n. | 12,8 | 0,07 | 11,1 | n.n. |
| OctaCDF | 26 | n.n. | 1368 | 4 | 400 | 7 | 1,5 | <0,04 | 0,7 | n.n. | 4,6 | <0,04 | 2,1 | n.n. |
| Summe PCDF | 483 | 31 | 3159 | 157 | 1381 | 132 | 119,5 | 1,7 | 31,3 | —— | 103,2 | 0,47 | 78,8 | 10,1 |

1) unbehandelt

EP 0 252 521 B1

Die Flugaschen A, B und C hatten folgende Zusammensetzung:

| Metallgehalt g/kg | Flugasche | | |
|---|---|---|---|
| | A | B | C |
| Cr | 2,2 | 0,3 | 0,3 |
| Pb | 39,2 | 6,9 | 5,4 |
| Cd | 0,18 | 0,46 | 0,24 |
| Ni | 0,16 | 0,19 | 0,57 |
| Cu | 0,8 | 3,1 | 3,4 |
| Zu | 14,7 | 31,4 | 20,1 |
| Fe | 46,6 | 43,4 | 48,7 |

**Beispiel 3**

Flugasche aus einer kommunalen Müllverbrennungsanlage wurde in einer geschlossenen Vorrichtung erhitzt. Die Vorrichtung bestand aus einem beheizbaren, horizontal angeordneten Rohr mit einer sich drehenden Paddelwelle, die den Weitertransport der Flugasche besorgt. Der Ein- und Austrag der Flugasche erfolgte unter Sauerstoffmangelbedingungen mit Hilfe eines geeigneten Schiebersystems. Der Durchsatz betrug ca. 60 kg/h.

Die eingesetzte Flugasche enthielt polychlorierte Dibenzodioxine und Dibenzofurane. Zur Analyse der unbehandelten bzw. thermisch behandelten Flugaschen wurde folgendermaßen vorgegangen: Je 25 g der Flugaschen wurden 1 N HCl versetzt und 30 Min. gerührt. Anschließend wurden die Proben abfiltriert, mit Wasser gewaschen und 24 h an der Luft getrocknet. Die Proben wurden jeweils in Glasfaserextraktionshülsen überführt, mit 200 µl eines $^{13}C$-Standard-PCDD/PCDF-Mischung* 1 dotiert, mit wasserfreiem Natriumsulfat überschichtet und 24 h in einer Soxhlet-Apparatur mit Toluol extrahiert. Der Toluolextrakt wurde unter Vakuumkontrolle auf etwa 5 ml eingeengt.

Der eingeengte Toluolextrakt wurde auf eine Säule - gefüllt mit 25 g basischem Atuminiumoxid Aktivitätsstufe Super I und überschichtet mit 20 g Natriumsulfat - gegeben. Danach wurde mit 100 ml Benzol und anschließend mit 200ml Hexan/Dichlormethan (98:2) nachgewaschen. Die PCDD/PCDF wurden anschließend mit 200 ml Hexan/Dichlormethan (1:1) eluiert.

Diese Fraktion wurde auf ca. 30 µl eingeengt. Die erhaltenen Proben wurden mittels GC/MS analysiert.

Die Ergebnisse sind in der nachfolgenden Tabelle 9 zusammengestellt.

110 ng $^{13}C_{12}$-2,3,7,8-TCDD, $^{13}C_{12}$-2,3,7,8-TCDF, $^{13}C_{12}$-1,2,3,7,8-PeCDD, $^{13}C_{12}$-1,2,3,7,8-PeCDF, $^{13}C_{12}$-1,2,3,6,7,8-HexCDD, $^{13}C_{12}$-1,2,3,4,7,8-HexCDF, sowie je 20 ng $^{13}C_{12}$-1,2,3,4,6,7,8-HepCDD, $^{13}C_{12}$-1,2,3,4,6,7,8-HepCDF, $^{13}C_{12}$-OctaCDD und $^{13}C_{12}$-OctaCDF.

## Tabelle 9

Bestimmung polychlorierter Dibenzodioxine und Dibenzofurane als Summe der verschiedenen Chlorierungsgrade

Probenart: Flugasche, alle Angaben in ng/g

| | unbeh. | 1/2 h, 400 °C | unbeh. | 1 h, 400 °C |
|---|---|---|---|---|
| TetraCDD | 19.8 | 4.18 | 42.1 | n.n. |
| PentaCDD | 78.0 | 5.86 | 93.5 | n.n. |
| HexaCDD | 152.1 | 4.87 | 129.8 | n.n. |
| HeptaCDD | 112.3 | 4.13 | 75.5 | n.n. |
| OctaCDD | 87.4 | 1.98 | 73.4 | 0.30 |
| Summe PCDD | 449.6 | 21.02 | 414.3 | 0.30 |
| TetraCDF | 111.8 | 8.44 | 236.5 | 0.67 |
| PentaCDF | 113.6 | 5.53 | 205.2 | n.n. |
| HexaCDF | 75.3 | 2.55 | 87.3 | n.n. |
| HeptaCDF | 38.3 | 1.57 | 43.5 | n.n. |
| OctaCDF | 10.9 | 0.81 | 9.2 | n.n. |
| Summe PCDF | 349.9 | 18.90 | 581.7 | 0.67 |

Die Nachweisgrenze pro Einzelkomponente lag bei 0,01 ng/g

**Beispiel 4**

Ein indirekt beheizter Reaktor (25 mm i.D. und 250 mm Höhe) wurde mit ca. 20 ml der unten beschriebenen Katalysatoren gefüllt. Ein Gasstrom (Luf+Wasser) beladen mit den jeweils angegebenen Konzentrationen an Hexachlorbenzol (HCB) und 2,4,8-Trichlordibenzofuran (TriCDF) wurde unter den angegebenen Bedingungen durch den Reaktor geleitet.
Vor und nach dem Katalysatorbett konnten Gasproben abgesaugt werden, die über hochaktive Kohlepatronen (5 mg Aktivkohle) zur Adsorption von HCB und 2,4,8-TriCDF geleitet wurden. Die Aktivkohlepatronen wurden mit $CS_2$ eluiert und das Eluat mittels GC/FID bzw. GC/ECD auf Ausgangs- und Zersetzungsprodukte untersucht. Außerdem wurde der Gasstrom nach dem Katalysator laufend auf $Cl_2$ und $Cl^-$ analysiert.
a) Katalysator: Kupfer-Chromoxid/Siliciumoxid-Pellets
Konzentration im Gasstrom: 10 ppm HCB, 3 ppm TriCDF in Luft + $H_2O$ (10:2 V/V)
Raumgeschwindigkeit 4000/h

| | | |
|---|---|---|
| Betriebsstunden | 600 | 680 |
| Katalysatortemperatur (°C) | 400 | 400 |

| | | |
|---|---|---|
| Zerstörung (%) | | |
| HCB | 98 | 99 |
| TriCDF | >99 | >99 |

b) Katalysator UC13X + NiO (Calciniert)
Konzentration im Gasstrom: 130 ppm HCB, 50 ppm TriCDF in Luft + Wasser (10:2 V/V)

| | | | | |
|---|---|---|---|---|
| Betriebsstunden | 35 | 120 | 350 | 670 |
| Katalysatortemperatur (°C) | 450 | 450 | 450 | 450 |

| | | | | |
|---|---|---|---|---|
| Zerstörung (%) | | | | |
| HCB | 99 | 98 | 98 | 99 |
| TriCDF | >99 | >99 | >99 | >99 |

## Patentansprüche

1. Verfahren zum Abbau von polyhalogenierten Cycloalkylverbindungen mit 4 bis 8 Kohlenstoffatomen und polyhalogenierten Aromaten mit mindestens 5 Kohlenstoffatomen durch Erhitzen in Anwesenheit eines Katalysators, **dadurch gekennzeichnet**, daß man

a) ein mit den polyhalogenierten Verbindungen kontaminiertes festes Substrat in innigem Kontakt mit dem Katalysator in einem geschlossenen System erhitzt, wobei man als Katalysator Asche oder ein Metall eines Elementes der Gruppen Ia, Ib, IIa, IIb, IIIa, IVa, IVb, VIb, VIIb oder VIIIb des Periodensystems oder ein Oxid, Carbonat oder Silikat davon, oder eine Mischung davon, verwendet,

b) die in einem mit den polyhalogenierten Verbindungen kontaminierten festen Substrat vorhandenen flüchtigen Bestandteile oder ein mit den polyhalogenierten Verbindungen kontaminiertes flüssiges Substrat oder die polyhalogenierten Verbindungen selbst durch Erhitzen oder Verbrennen in den gasförmigen Zustand überführt und die entstandenen Gase oder ein mit den polyhalogenierten Verbindungen kontaminiertes gasförmiges Substrat in Gegenwart von Sauerstoff und Wasser in innigem Kontakt mit dem Katalysator erhitzt, wobei man als Katalysator ein Metalloxid eines Elementes der Gruppen Ia, Ib, IIa, IIb, IIIa, IVa, IVb, VIb, VIIb oder VIIIb des Periodensystems oder eine Mischung davon in Form eines Festbettes verwendet

oder

c) mit den polyhalogenierten Verbindungen kontaminierte Flugasche aus Müll- oder Abfallverbrennungsanlagen direkt in einem nicht-durchströmten System unter Sauerstoffmangelbedingungen erhitzt, wobei man jeweils bei einer Temperatur zwischen 200 und 550 °C arbeitet.

2. Verfahren nach Anspruch 1, dadurch gekennzeichnet, daß man als Katalysator beim Verfahren a) Na, K, Mg, Ca, Ba, Zn, Ni, Pb, Ti, Cu, Fe, Al, Pt, V, W, Mo, Rh oder Cr oder ein Oxid oder Carbonat davon und beim Verfahren b) ein Oxid dieser Metalle verwendet.

3. Verfahren nach Anspruch 1, dadurch gekennzeichnet, daß man als Katalysator beim Verfahren a) ein Eisenoxid, Calcium-, Magnesium-, Natrium- oder Kaliumcarbonat oder eine Mischung davon verwendet.

4. Verfahren nach Anspruch 1, dadurch gekennzeichnet, daß man als Katalysator beim Verfahren a) Holzaschen, oder Filterstäube aus Müll- und Abfallverbrennungsanlagen verwendet.

5. Verfahren nach einem der vorhergehenden Ansprüche, dadurch gekennzeichnet, daß man bei einer Temperatur von 300 - 500°C arbeitet.

6. Verfahren nach einem der vorhergehenden Ansprüche, dadurch gekennzeichnet, daß man als kontaminiertes festes Substrat Erdreich oder Adsorptionsmaterialien, insbesondere Aktivkohle, als kontaminiertes flüssiges Substrat Sickerwasseröl oder einen polyhalognierte Verbindungen enthaltenden Extrakt und als kontaminiertes gasförmiges Substrat die Abgase eines mit Deponiegasen betriebenen Verbrennungsmotors oder die beim Verbrennen von PCB-Ölen oder PCB-beladenen Verpackungsmeterialien entstehenden Gase einsetzt.

7. Verfahren nach Anspruch 1, dadurch gekennzeichnet, daß man beim Verfahren gemäß Anspruch Ic unter Inertgasatmosphäre arbeitet.

8. Verfahren nach einem der vorhergehenden Ansprüche, dadurch gekennzeichnet, daß die polyhalogenierten aromatischen Verbindungen mehr als 10 Kohlenstoffatome aufweisen.

9. Verfahren nach einem der Ansprüche 1 bis 8, dadurch gekennzeichnet, daß es sich bei den polyhalogenierten Verbindungen um polychlorierte Dibenzodioxine einschließlich Tetrachlordibenzodioxin, polychlorierte Dibenzofurane, Hexachlorbenzol und Hexachlorcyclohexan handelt.

## Claims

1. Process for decomposing polyhalogenated cycloalkyl compounds having 4 to 8 carbon atoms and polyhalogenated aromatics having at least 5 carbon atoms by heating in the presence of a catalyst, characterised in that

a) a solid substrate contaminated with the polyhalogenated compounds is heated in a closed system in intimate contact with the catalyst, ash or a metal of an element of groups Ia, Ib, IIa, IIb, IIIa, IVa, IVb, VIb, VIIb or VIIIb of the periodic table or an oxide, carbonate or silicate thereof, or a mixture thereof, being used as the catalyst,

b) the volatile constituents present in a solid substrate contaminated with the polyhalogenated compounds or a liquid substrate contaminated with the polyhalogenated compounds or the polyhalogenated compounds themselves is/are converted to the gaseous state by heating or combustion and the resulting gases or a gaseous substrate contaminated with the polyhalogenated compounds is/are heated in intimate contact with the catalyst in the presence of oxygen and water, a metal oxide of an element of groups Ia, Ib, IIa, IIb, IIIa, IVa, IVb, VIb, VIIb or VIIIb of the periodic table or a mixture thereof in the form of a solid bed being used as the catalyst

or

c) flue ashes from refuse or waste incinerator plants contaminated with the polyhalogenated compounds are heated directly in a non-flow-through system under oxygen-deficient conditions,

the operating temperature being between 200 and 550°C.

2. Process according to claim 1, characterised in that Na, K, Mg, Ca, Ba, Zn, Ni, Pb, Ti, Cu, Fe, Al, Pt, V, W, Mo, Rh or Cr or an oxide or carbonate thereof is used as the catalyst in process a) and an oxide of these metals is used as the catalyst in process b).

3. Process according to claim 1, characterised in that an iron oxide, calcium, magnesium, sodium or potassium carbonate or a mixture thereof is used as the catalyst in process a).

4. Process according to claim 1, characterised in that wood ash or filter dust from refuse or waste incinerator plants is used as the catalyst in process a).

5. Process according to one of the preceding claims, characterised in that the operating temperature is from 300 - 500°C.

6. Process according to one of the preceding claims, characterised in that earth or adsorbent materials, especially active carbon, is/are used as the contaminated solid substrate, seepage water oil or an extract containing polyhalogenated compounds is used as the contaminated liquid substrate and the exhaust gases from an internal combustion engine operated by waste gases or the gases produced upon the combustion of PCB oils or packing materials loaded with PCB's are used as the contaminated gaseous substrate.

7. Process according to claim 1, characterised in that the process according to claim 1c is carried out in an inert gas atmosphere.

8. Process according to one of the preceding claims, characterised in that the polyhalogenated aromatic compounds have more than 10 carbon atoms.

9. Process according to one of claims 1 to 8, characterised in that the polyhalogenated compounds are polychlorinated dibenzodioxins, including tetrachlorodibenzodioxin, polychlorinated dibenzofurans, hexachlorobenzene and hexachlorocyclohexane.

## Revendications

1. Procédé pour décomposer les composés de cycloalcoyle polyhalogénés comportant 4 à 8 atomes de carbone et des composés aromatiques polyhalogénés comportant au moins 5 atomes de carbone par chauffage en présence d'un catalyseur, procédé caractérisé par le fait que

a) on chauffe dans un système clos un substrat solide, contaminé par les composés polyhalogénés, en contact intime avec le catalyseur, étant précisé que comme catalyseur, on emploie des cendres ou un métal d'un élément des groupes Ia, Ib, IIa, IIb, IIIa, IVa, IVb, VIb, VIIb ou VIIIb du système périodique ou un oxyde, un carbonate ou un silicate de ces éléments ou un mélange d'entre eux,

b) on transforme à l'état gazeux, par chauffage ou combustion, les composants volatils existant dans un substrat solide contaminé par les composés polyhalogénés, ou bien un substrat fluide contaminé par les composés polyhalogénés, ou bien les composés polyhalogénés eux-mêmes, et on chauffe, en présence d'oxygène et d'eau, en contact intime avec le catalyseur, les gaz qui apparaissent ou un substrat gazeux contaminé par les composés polyhalogénés, le catalyseur employé étant un oxyde métallique d'un élément des groupes Ia, Ib, IIa, IIb, IIIa, IVa, IVb, VIb,VIIb ou VIIIb de la classification périodique ou un mélange d'entre eux sous forme d'un lit fixe

ou

c) on chauffe directement de la cendre volante contaminée par les composés polyhalogénés et provenant d'installations de combustion d'ordures ou de déchets, dans un système ne s'écoulant pas en le defaut d'oxygène, étant précisé que l'on travaille chaque fois à une température comprise entre 200 et 550°C.

2. Procédé selon la revendication 1, caractérisé par le fait que l'on emploie comme catalyseur, dans le cas du procédé a), Na, K, Mg, Ca, Ba, Zn, Ni, Pb, Ti, Cu, Fe, Al, Pt, V, W, Mo, Rh ou Cr ou un oxyde ou un carbonate de ces métaux et, dans le cas du procédé b) un oxyde de ces métaux.

3. Procédé selon la revendication 1, caractérisé par le fait que l'on emploie comme catalyseur, dans le cas du procédé a) un oxyde de fer, un carbonate de calcium, de magnésium, de sodium ou de potassium ou un mélange d'entre eux.

4. Procédé selon la revendication 1, caractérisé par le fait que l'on emploie comme catalyseur dans le cas du procédé a) des cendres de bois ou des poussières de filtration provenant d'installations de combustion d'ordures et de déchets.

5. Procédé selon l'une des revendications précédentes, caractérisé par le fait que l'on travaille à une température de 300 - 500°C.

6. Procédé selon l'une des revendications précédentes, caractérisé par le fait que l'on emploie, comme substrat solide contaminé, de la terre ou des matériaux d'adsorption en particulier du charbon actif, comme substrat volatil contaminé, de l'huile d'égouttage contenant de l'eau ou un extrait contenant des composés polyhalogénés et, comme substrat gazeux contaminé, des gaz d'échappement d'un moteur à combustion interne fonctionnant avec le gaz provenant d'un dépôt d'ordures ou bien les gaz qui apparaissent lors de la combustion d'huiles à base de biphényles polychlorés PCB ou de matériaux d'emballage chargés en PCB.

7. Procédé selon la revendication 1, caractérisé par le fait que, dans le cas du procédé selon la revendication 1c, on travaille sous atmosphère de gaz inerte.

8. Procédé selon l'une des revendications précédentes, caractérisé par le fait que les composés aromatiques polyhalogénés comportent plus de 10 atomes de carbone.

9. Procédé selon l'une des revendications 1 à 8, caractérisé par le fait que, dans le cas des composés polyhalogénés, il s'agit de dibenzodioxine polychlorée, y compris de dibenzodioxine tétrachlorée, de dibenzofurane polychloré, de benzène hexachloré et de cyclohexane hexachloré.